# EUROPEAN PATENT APPLICATION

(11) **EP 4 037 075 A1**
(43) Date of publication of application: **03.08.2022**
(21) Application number: 20712426.4
(22) Date of filing: 16.03.2020
(51) Int. Cl.: H01M 50/20

(54) **BATTERY MODULE**

(30) Priority: 29.09.2019 CN 201910933711; 29.09.2019 CN 201921648504 U
(71) Applicant: Dongguan Amperex Technology Limited, Dongguan, Guangdong 523808 (CN)
(72) Inventor: SHAO, Changjian, Dongguan, Guangdong 523808 (CN); ZHOU, Jinbing, Dongguan, Guangdong 523808 (CN)
(74) Representative: Klunker IP Patentanwälte PartG mbB
(86) International application number: PCT/CN2020/079532
(87) International publication number: WO 2021/056983

(57) **Abstract**

The present application relates to a battery module, including a plurality of cells sequentially disposed in a laminated mode and at least one buffer member. The buffer members are disposed between at least two of the plurality of cells, and the buffer members can elastically deform to provide an expansion space when the cells expand, and restore when the cells contract. At least one of the thickness, length and width of the buffer members is related to corresponding one of the thickness, length or width of the cells. When deforming within a strain range of 0% to 85%, the buffer members provide an acting force of 0 to 1 Mpa. When the battery module is not charged, the cells bear a certain pressure, so that the battery module is compact in overall structure and is in a compressed state. While during charging, the cells are allowed to have expansion to a certain extent. Therefore, the cycle life of the battery module is remarkably prolonged.

## Description

### Background of the Invention

### Field of the Invention

The present application relates to an energy storage device, in particular to a battery having a rechargeable battery module, such as battery modules adopted by electric bicycles, electric automobiles and other electric vehicles.

### Description of the Prior Art

Electric vehicles such as electric bicycles and electric automobiles are used more and more widely with increasing requirements for the energy conservation and environment protection aspect. For these electric vehicles, batteries have dominant effects and significance as a power source, and are directly related to manufacturing costs, service lives etc. of these electric vehicles. However, in the prior art, batteries have the problems of short lives, rapid decrease of capacity along with increasing of charging times, etc.

Specifically, existing electric vehicles (such as electric bicycles, electric tricycles and electric automobiles) usually adopt pouch lithium batteries. However, the pouch lithium batteries in the prior art have shortcomings. For example, in the charging and discharging cycle process, since the lithium intercalation behavior of anode materials causes cell expansion or cell plate deformation, the thickness of cells is increased, the battery capacity is quickly decreased, and the cycle life of the whole batteries is shortened. In order to solve the problem of thickness increasing caused by cell expansion, an arrangement mode of reserving gaps between cells is generally used at present. But this structure further causes other problems. For example, since there is no pressure between the cells, the whole structure of a battery module is relatively loose, and the cells can freely expand in the using process, which also shortens the cycle life of the cells.

### Summary of the Invention

The present application aims to solve at least one of the above technical problems in the prior art. For this purpose, the present application provides a battery module. When the battery module is not charged, cells bear a certain pressure, so that the battery module is compact in overall structure and is in a compressed state. While the battery module is charged, the cells are allowed to have expansion to a certain extent, and in a process that the cells continuously contract along with proceeding of discharging, the cells still bear a certain pressure, so that the compressed state continues to be kept. In this way, the overall cycle life of the battery module is remarkably prolonged.

Embodiments of the present application provide a battery module, including a plurality of cells sequentially disposed in a laminated mode; and at least one buffer member, disposed between at least two of the plurality of cells, wherein the buffer members can elastically deform to provide an expansion space when the cells expand, and restore when the cells contract. Of course, restoration is not necessarily 100% restoration, that is, the buffer members may be not completely restored to an original state thereof. In the restoration process, the buffer members are generally closely contact the cells adjacent to the buffer members. At least one of the thickness, length and width of the buffer members is related to corresponding one of the thickness, length or width of the cells. When deforming within a strain range of 0% to 85%, the buffer members provide an acting force of 0 to 1 Mpa to (for example) the cells adjacent to the buffer members. This may be decided by performance parameters of the buffer members, and also may be jointly decided by the performance parameters of the buffer members and sizes (such as thicknesses) of the buffer members.

Specifically, at least one of the thickness, length and width of the buffer members is related to corresponding one of the thickness, length or width of the cells. When deforming within a strain range of 10% to 70%, the buffer members provide an acting force of 0 to 0.5 Mpa to (for example) the cells adjacent to the buffer members; and when deforming within a strain range of 70% to 80%, the buffer members provide an acting force of 0.5 to 0.8 Mpa to (for example) the cells adjacent to the buffer members.

According to one implementation of the present application, cells of a first number and cells of a second number are disposed on two sides of each buffer member respectively, wherein the first number is greater than or equal to the second number, the first number is N, and the thickness of each buffer member is N^{∗}(0.12 to 0.18) times the thickness of each cell. Preferably, the thickness of each buffer member is N^{∗}(0.14 to 0.16) times the thickness of each cell.

In some implementations, buffer members are disposed between adjacent cells of a plurality of cells, and the thickness of each buffer member is 0.14 to 0.16 times the thickness of each cell. For example, the thickness of each buffer member is about 0.15 times the thickness of each cell.

According to another implementation of the present application, a buffer member is disposed between every two cells and adjacent two cells of a plurality of cells, and the thickness of each buffer member is 0.28 to 0.32 times the thickness of each cell. For example, the thickness of each buffer member is about 0.3 times the thickness of each cell.

Generally, each buffer member contains polypropylene, polyethylene or EVA foam.

According to one implementation of the present application, cells and buffer members each have a flat-plate structure, and the length of each buffer member is 0.9 to 1.05 times the length of each cell. Preferably, the length of each buffer member is 0.95 to 1.0 times the length of each cell.

According to one implementation of the present application, cells and buffer members each have a flat-plate structure, and the width of each buffer member is 0.9 to 1.05 times the width of each cell. Preferably, the width of each buffer member is 0.95 to 1.0 times the width of each cell.

According to some implementations of the present application, the battery module further includes cell brackets for supporting cells, and the cell brackets each have a frame structure to cover the periphery of the cells so as to prevent exposure of the cells.

According to some implementations of the present application, the battery module further includes a first end plate and a second end plate which are oppositely disposed, wherein cells, buffer members and cell brackets are located and clamped between the first end plate and the second end plate.

According to some implementations of the present application, the battery module further includes fixing members configured to fix cells, buffer members and cell brackets between a first end plate and a second end plate. For example, the fixing members may be ring-shaped binding members and made of steel strips.

According to some implementations of the present application, the battery module includes a separation layer disposed between a first end plate and a cell bracket adjacent thereto to elastically deform.

According to some implementations of the present application, the battery module includes a separation layer disposed between a second end plate and a cell bracket adjacent thereto to elastically deform.

According to the battery module provided by the present application, since the buffer members (generally foam) which can elastically deform are disposed between the cells and sizes of the buffer members are related to sizes of the cells (namely at least one of the thickness, length and width), that is, the sizes of the buffer members and the sizes of the cells have a good proportional relation, so that in the process that the cells expand during charging of the battery module, the buffer members deform within a certain strain range (such as 0% to 85%), and in the period, the buffer members always provide a certain acting force (such as 0 to 1 Mpa) to the cells. Therefore, the buffer members not only can effectively buffer the cells, but also can provide a proper pressure to the cells. While in the discharging process, along with contraction of the cells, the buffer members restore due to elasticity and can still apply a certain pressure to the cells, so that the cells continue to be kept in the compressed state. In this way, cycle lives of the cells and even the whole battery module are remarkably prolonged.

### Brief description of the drawings

To more clearly describe the specific implementations of the present application and their superior technical effects, the embodiments of the present application will be described in detail below with reference to the accompanying drawings.
Fig. 1 is a schematic diagram of an overall structure of a battery module provided according to an embodiment of the present application;
Fig. 2 is a schematic exploded diagram of the battery module shown in Fig. 1 and provided according to the present application;
Fig. 3 is a schematic exploded diagram of a sub-module of the battery module provided according to the present application;
Fig. 4 is a schematic exploded diagram of another sub-module of the battery module provided according to the present application;
Fig. 5 is a schematic exploded diagram of further another sub-module of the battery module provided according to the present application;
Fig. 6 is a schematic diagram of a relation between a strain range of buffer members of the battery module provided according to the present application and generated pressure (namely, acting force to (for example) cells adjacent by the buffer members);
Fig. 7A is a schematic diagram of a maintaining rate of capacity of a battery module provided according to an exemplary embodiment of the present application;
Fig. 7B is a schematic diagram of a maintaining rate of capacity of a battery module provided according to Comparative Embodiment 1 of the present application;
Fig. 7C is a schematic diagram of a maintaining rate of capacity of a battery module provided according to Comparative Embodiment 2 of the present application;
Fig. 8A is a schematic diagram of pressure change of the battery module provided according to the exemplary embodiment of the present application;
Fig. 8B is a schematic diagram of pressure change of the battery module provided according to Comparative Embodiment 1 of the present application; and
Fig. 8C is a schematic diagram of pressure change of the battery module provided according to Comparative Embodiment 2 of the present application.

### Detailed Description

The following describes in detail the embodiments of the present application with reference to the accompanying drawings. The aspects of the present application will become more comprehensible from the following detailed description made with reference to the accompanying drawings. It should be noted that these embodiments are exemplary, are only used to explain and illustrate the technical solutions of the present application, and are not intended to limit the present application. Those skilled in the art may make various modifications and variations on the basis of these embodiments, and all technical solutions obtained by equivalent transformations shall fall within the protection scope of the present application.

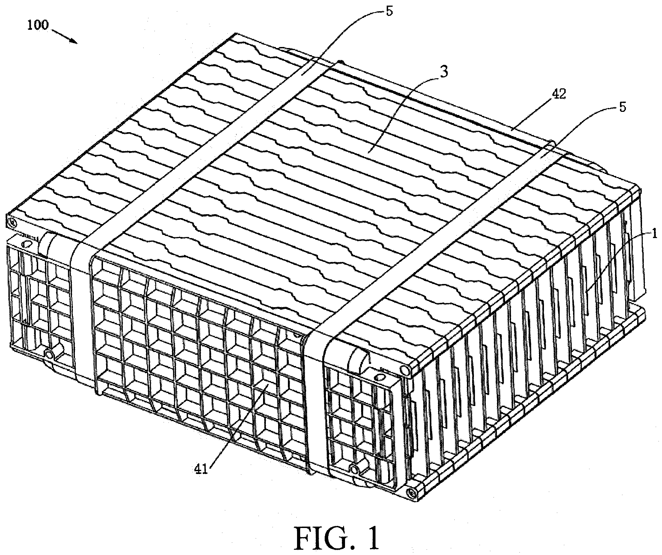

Fig. 1 shows a schematic diagram of an overall structure of a battery module provided according to the present application.

Referring to Fig. 1, a battery module 100 provided according to the embodiment of the present application may include: cells 1, cell brackets 3, end plates 41 and 42 and fixing members 5. The battery module 100 may further include: buffer members (not shown in Fig. 1). In some embodiments, the battery module 100 may include a plurality of cells 1, a plurality of cell brackets 3, end plates 41 and 42 and a plurality of fixing members 5. The battery module 100 may further include: a plurality of buffer members (not shown in Fig. 1).

The cells 1 may include flat-plate structures. The cells 1 may include, but not limited to, for example, polygonal flat-plate structures. The cells 1 may include, but not limited to, for example, quadrangular flat-plate structures. The cells 1 may include, but not limited to, for example, rectangular flat-plate structures. The cells 1 may include, but not limited to, for example, square flat-plate structures. The cells 1 can be configured to store energy. Generally, in one battery module 100, each cell 1 has the basically identical sizes (lengths, widths and thicknesses), so that manufacture and installation are convenient.

The cell brackets 3 may include frame structures to cover the periphery of the cells 1 so as to prevent exposure of the cells 1. For example, the cells 1 may be disposed in frames of the cell brackets 3. Generally, in one battery module, the number of the cell brackets 3 is the same as the number of the cells 1. That is, one cell bracket 3 corresponds to one cell 1. Of course, two adjacent cells 1 may also share one cell bracket 3. The cell brackets 3 may include, but not limited to, for example, polygonal frame structures. The cell brackets 3 may include, but not limited to, for example, quadrangular frame structures. The cell brackets 3 may include, but not limited to, for example, rectangular frame structures. The cell brackets 3 may include, but not limited to, for example, square frame structures. The cell brackets 3 and the cells 1 may be matched in structure. The cell brackets 3 may be located under the cells 1. The cell brackets 3 may be configured to contain the cells 1. The cell brackets 3 may be configured to support the cells 1. The cell brackets 3 may be configured to fix the cells 1. The cell brackets 3 may be connected with the cells 1. The cell brackets 3 may be directly connected with the cells 1. The cell brackets 3 may be directly connected with the cells 1 via, but not limited to, for example, a joggling mode. The cell brackets 3 may be indirectly connected with the cells 1 through, but not limited to, for example, connecting members (not shown in Fig. 1). The connecting members may include, but not limited to, for example, an adhesive.

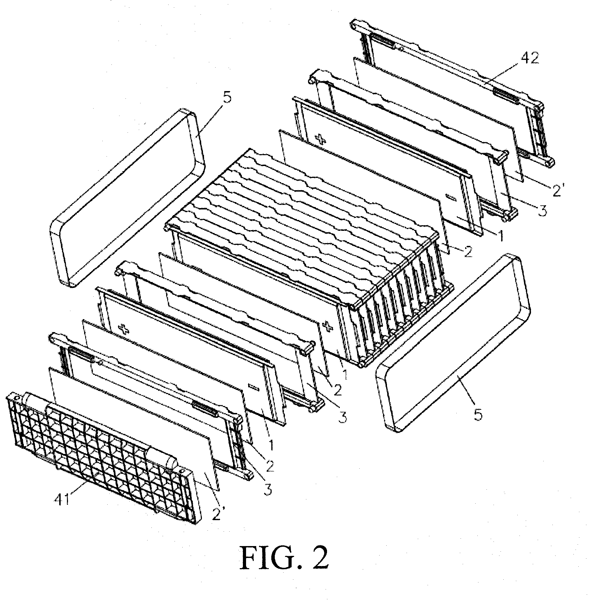

The end plate 41 may include approximate-flat-plate structures. The end plate 41 may include, but not limited to, for example, polygonal flat-plate structures. The end plate 41 may include, but not limited to, for example, quadrangular flat-plate structures. The end plate 41 may include, but not limited to, for example, rectangular flat-plate structures. The end plate 41 may include, but not limited to, for example, square flat-plate structures. The end plate 41 and the cell bracket 3 adjacent thereto may be matched in structure. For example, the end plate 41 may be located under/outside (the left sides in Figs. 1 and 2) the cell bracket 3. The end plate 41 may be configured to fix the cell bracket 3. The end plate 41 may be connected with the cell bracket 3.

The end plate 42 may also include approximate-flat-plate structures. The end plate 42 may include, but not limited to, for example, polygonal flat-plate structures. The end plate 42 may include, but not limited to, for example, quadrangular flat-plate structures. The end plate 42 may include, but not limited to, for example, rectangular flat-plate structures. The end plate 42 may include, but not limited to, for example, square flat-plate structures. The end plate 42 and the cell bracket 3 adjacent thereto may be matched in structure. For example, the end plate 42 may be located on/outside (the right sides in Figs. 1 and 2) the cell bracket 3. The end plate 42 may be configured to fix the cell bracket 3. The end plate 42 may be connected with the cell bracket 3.

The end plate 41 and the end plate 42 may be oppositely disposed. The cells 1 may be located between the end plate 41 and the end plate 42. The cell brackets 3 may be located between the end plate 41 and the end plate 42. The end plate 41 and the end plate 42 are oppositely disposed on outermost sides of two ends respectively. The end plate 41 and the end plate 42 may clamp the cell brackets 3 and the cells 1.

The fixing members 5 may be disposed on the end plate 41 and the end plate 42 in a sleeving mode. The fixing members 5 may be of ring-shaped structures. The fixing members 5 may be ring-shaped binding members. The fixing members 5 may fix the cells 1 and the cell brackets 3 between the end plate 41 and the end plate 42. The fixing members 5 may have elasticity. The fixing members 5 may include, but not limited to, for example, steel, rubber or other proper materials.

Fig. 2 is a schematic exploded diagram of the battery module shown in Fig. 1. Referring to Fig. 2, the battery module 100 provided according to the embodiment of the present application may include cells 1, at least one buffer member 2, cell brackets 3, end plates 41 and 42 and fixing members 5. In some embodiments, the battery module 100 may include a plurality of cells 1, a plurality of buffer members 2, a plurality of cell brackets 3, end plates 41 and 42 and a plurality of fixing members 5. Generally, each cell 1, each buffer member 2 and each cell bracket 3 respectively have the basically identical sizes (lengths, widths and thicknesses). The plurality of cells 1 may be sequentially disposed in a laminated mode, and the buffer members 2 are disposed between at least two of the plurality of cells 1. The buffer members 2 can elastically deform to absorb expansion of the cells 1 when the cells 1 expand, while when the cells 1 contract, the buffer members 2 restore to be closely contact to the cells 1 adjacent thereto. At least one of the thickness, length and width of the buffer members 2 is related to corresponding one of the thickness, length or width of the cells 1, so that when deforming within a strain range of 0% to 85% (e.g., the thickness becomes 0% to 15% of the original thickness of the buffer members 2), the buffer members 2 provide an acting force of 0 to 1 Mpa to the cells 1 adjacent thereto. Therefore, in the process that the cells expand during charging, the buffer members always provide the acting force of 0 to 1 Mpa to the cells. As a result, the buffer members 2 can not only effectively buffer the cells 1, but also provide a proper pressure to the cells 1. While in the discharging process, along with contraction of the cells 1, the buffer members 2 restore due to elasticity and can still apply a certain pressure to the cells 1, so that the cells 1 continue to be kept in a compressed state. In this way, the overall cycle life of the battery module is remarkably prolonged.

In other embodiments, a battery module 100 may include a separation layer 2' disposed between a first end plate 41 and a cell bracket 3 adjacent thereto, and may also include a separation layer 2' disposed between a second end plate 42 and a cell bracket 3 adjacent thereto (referring to Fig. 2). That is, in the embodiments, the battery module 100 may include a plurality of cells 1, the plurality of cell brackets 3, a plurality of buffer members 2, the plurality of separation layers 2', the end plates 41 and 42 and a plurality of fixing members 5. The separation layers 2' may adopt the same material as the buffer members 2, so that the separation layers 2' can also elastically deform to buffer expansion of the cells 1.

The buffer members 2 may include flat-plate structures. The buffer members 2 may include, but not limited to, for example, polygonal flat-plate structures. The buffer members 2 may include, but not limited to, for example, quadrangular flat-plate structures. The buffer members 2 may include, but not limited to, for example, rectangular flat-plate structures. The buffer members 2 may include, but not limited to, for example, square flat-plate structures. The buffer members 2 may be located between the cells 1. The buffer members 2 may be configured to provide a buffer effect to the cells 1. The buffer members 2 may be configured to provide a buffer effect to the cell brackets 3. The buffer members 2 may be configured to provide a buffer effect to the end plate 41. The buffer members 2 may be configured to provide a buffer effect to the end plate 42.

The buffer members 2 may include, but not limited to, for example, foam. The buffer members 2 may include, but not limited to, for example, foam made of microporous foamed polyolefin materials. The buffer members 2 may include, but not limited to, for example, polypropylene, polyethylene or EVA foam. The density of the buffer members 2 may be in the range of 10-500 kg/m³. The density of the buffer members 2 may be preferably in the range of 10-300 kg/m³. The density of the buffer members 2 may be most preferably in the range of 20-60 kg/m³. The hardness of the buffer members 2 may be in the range of 20-80 degrees (HC). The hardness of the buffer members 2 may be preferably in the range of 30-70 degrees (HC). The hardness of the buffer members 2 may be most preferably in the range of 50-70 degrees (HC). The buffer members 2 may have pores. The diameter of the pores of the buffer members 2 may be in the range of 10-300 microns. The diameter of the pores of the buffer members 2 may be preferably in the range of 10-150 microns. The diameter of the pores of the buffer members 2 may be most preferably in the range of 10-80 microns.

The sizes of the buffer members 2 may be related to the sizes of the cells 1. In other words, the sizes of the buffer members 2 may be determined according to the sizes of the cells 1. As described above, generally, all the cells in one battery module 100 have basically identical sizes. The sizes of the cells 1 may include thicknesses. The sizes of the cells 1 may include lengths. The sizes of the cells 1 may include widths. The sizes of the buffer members 2 may include thicknesses. The sizes of the buffer members 2 may include lengths. The sizes of the buffer members 2 may include widths. The buffer members 2 may have certain elasticity. The buffer members 2 may change under the action of extrusion force. In some embodiments, when the cells 1 are thickened due to expansion (in the charging process), the buffer members 2 may be extruded by the cells 1 to be thinned, and the buffer members 2 may provide certain buffer to the cells 1. In some embodiments, when the cells 1 are thinned due to contraction (in the discharging process), the buffer members 2 may restore to the initial thickness again (or approach the initial thickness) under the action of elastic force, and the buffer members 2 may prevent the cells 1 and the cell brackets 3 from loosening.

The separation layers 2' may include flat-plate structures. The separation layers 2' may include, but not limited to, for example, polygonal flat-plate structures. The separation layers 2' may include, but not limited to, for example, quadrangular flat-plate structures. The separation layers 2' may include, but not limited to, for example, rectangular flat-plate structures. The separation layers 2' may include, but not limited to, for example, square flat-plate structures. The separation layers 2' may be located under the cell brackets 3. The separation layers 2' may be located between the cell brackets 3 and the end plates 41 and 42. The separation layers 2' may be configured to provide a buffer effect to the cells 1. The separation layers 2' may be configured to provide a buffer effect to the cell brackets 3. The separation layers 2' may be configured to provide a buffer effect to the end plate 41. The separation layers 2' may be configured to provide a buffer effect to the end plate 42.

The separation layers 2' may include, but not limited to, for example, foam. The separation layers 2' may include, but not limited to, for example, foam made of microporous foamed polyolefin materials. The separation layers 2' may include, but not limited to, for example, polypropylene, polyethylene or EVA foam. The density of the separation layers 2' may be in the range of 10-500 kg/m³. The density of the separation layers 2' may be preferably in the range of 10-300 kg/m³. The density of the separation layers 2' may be most preferably in the range of 20-60 kg/m³. The hardness of the separation layers 2' may be in the range of 20-80 degrees (HC). The hardness of the separation layers 2' may be preferably in the range of 30-70 degrees (HC). The hardness of the separation layers 2' may be most preferably in the range of 50-70 degrees (HC). The separation layers 2' may have pores. The diameter of the pores of the separation layers 2' may be in the range of 10-300 microns. The diameter of the pores of the separation layers 2' may be preferably in the range of 10-150 microns. The diameter of the pores of the separation layers 2' may be most preferably in the range of 10-80 microns.

The sizes of the separation layers 2' may be related to the sizes of the cells 1. In other words, the sizes of the separation layers 2' may be determined according to the sizes of the cells 1. The sizes of the cells 1 may include thicknesses. The sizes of the cells 1 may include lengths. The sizes of the cells 1 may include widths. The sizes of the separation layers 2' may include thicknesses. The sizes of the separation layers 2' may include lengths. The sizes of the separation layers 2' may include widths. The separation layers 2' may have certain elasticity. The separation layers 2' may change under the action of extrusion force. In some embodiments, when the cells 1 are thickened due to expansion, the separation layers 2' may be extruded by the cells 1 to be thinned, and the separation layers 2' may provide certain buffer to the cells 1. In some embodiments, when the cells 1 are thinned due to contraction, the separation layers 2' may restore to the initial thickness again (or approach the initial thickness) under the action of elastic force, and the separation layers 2' may prevent the cell brackets 3 and the end plate 41 from loosening. In some embodiments, when the cells 1 are thinned due to contraction, the separation layers 2' may restore to the initial thickness again (or approach the initial thickness) under the action of elastic force, and the separation layers 2' may prevent the cell brackets 3 and the end plate 42 from loosening.

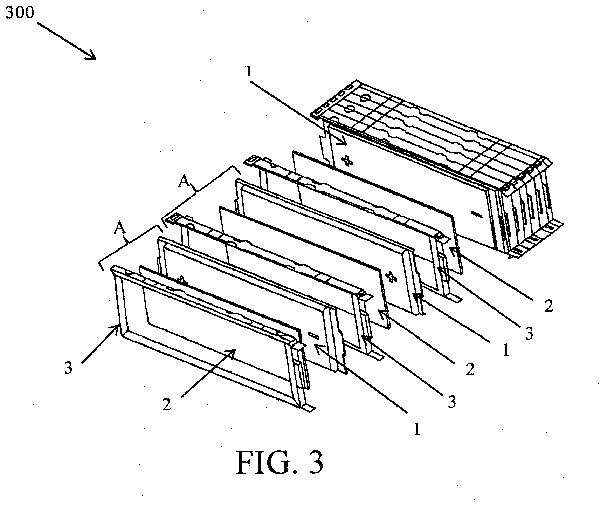

Referring to Fig. 3, Fig. 3 is a schematic exploded diagram of a sub-module of a battery module provided according to an embodiment of the present application. As shown in Fig. 3, the sub-module 300 may include a unit A. In some embodiments, the sub-module 300 may include a plurality of units A. One battery module may include a plurality of sub-modules 300. In the sub-module 300, one unit A may include a cell 1, a buffer member 2 and a cell bracket 3. As described above, the interior of the cell bracket 3 may be of a frame structure, and the cell 1 is installed in a frame of the cell bracket 3. The buffer member 2 is located on one side of the cell 1 to separate the cell 1 from a cell 1 adjacent thereto (namely in another unit A). According to the battery module constituted in this way, the buffer members 2 are disposed between each of the adjacent cells 1 of the plurality of cells 1 included therein (namely, a structure of "buffer member/cell/buffer member/cell/buffer member...cell/buffer member" is formed).

In the unit A, the size of the buffer member 2 may be determined by the size of the cell 1. The size of the cell 1 may include the thickness. The size of the cell 1 may include the length. The size of the cell 1 may include the width. The size of the buffer member 2 may include the thickness. The size of the buffer member 2 may include the length. The size of the buffer member 2 may include the width. For the battery module, a proportion of the sizes of the buffer members 2 to the sizes of the cells 1 is quite important. For example, compared with the cells 1, if the buffer members 2 are too thin, the buffer members 2 may fail to effectively provide buffer to the cells 1, and because deformation of the buffer members 2 is quite limited, the buffer members 2 fail to provide enough space to the cells 1 for expansion. For example, compared with the cells 1, if the buffer members 2 are too thick, the buffer members 2 will occupy space of the cells 1 meaninglessly, which lowers the overall capacity and efficacy of the battery module and enlarges the overall volume of the battery module.

In the unit A, the thickness T1 of the buffer member 2 may be related to the thickness T0 of the cell 1. In the unit A, the thickness T1 of the buffer member 2 may be determined by the thickness T0 of the cell 1. In the unit A, preferably, the thickness of the buffer member 2 is 0.12 to 0.18 times the thickness of the cell 1 (namely, 0.12T0≤T1≤0.18T0). More preferably, the thickness of the buffer member 2 is 0.14 to 0.16 times the thickness of the cell 1 (namely, 0.14T0≤T1≤0.16T0). In the unit A, the thickness of the buffer member 2 is most preferably about 0.15 times the thickness of the cell 1.

In the unit A, the length L1 of the buffer member 2 may be related to the length LO of the cell 1, or may be determined by the length L0 of the cell 1. Specifically, for example, the length L1 of the buffer member 2 may be greater than or equal to 0.8 times of the length LO of the cell 1, and more preferably may be greater than or equal to 0.9 times of the length LO of the cell 1. In an exemplary embodiment of the present application, in the unit A, the length L1 of the buffer member 2 is 0.9 to 1.05 times the length LO of the cell 1 (namely, 0.9L0≤L1≤1.05L0), and more preferably is 0.95 to 1.0 times the length LO of the cell 1 (namely, 0.95L0≤L1≤L0), and the length of the buffer member 2 is most preferably 0.95 times the length of the cell 1.

In the unit A, the width W1 of the buffer member 2 may be related to the width WO of the cell 1, or may be determined by the width W0 of the cell 1. In the unit A, the width W1 of the buffer member 2 may be greater than or equal to 0.8 times of the width WO of the cell 1, and more preferably may be greater than or equal to 0.9 times of the width WO of the cell 1. In the exemplary embodiment of the present application, in the unit A, the width W1 of the buffer member 2 is 0.9 to 1.05 times the width WO of the cell 1 (namely, 0.9W0≤W1≤1.05W0), and more preferably is 0.95 to 1.0 times the width W0 of the cell 1 (namely, 0.95W0≤W1≤1.0W0), and the width of the buffer member 2 is most preferably 0.95 times the width of the cell 1.

As described above, in the unit A, the thickness of the buffer member 2 may be about 0.15 times the thickness of the cell 1. The buffer member 2 with the thickness can achieve superior technical effects: the buffer member 2 can effectively buffer the cell 1 and will not unreasonably occupy space of the cell 1, which is beneficial to increasing the overall capacity of the battery module. In the unit A, under the condition of matching with the proper length of the buffer member 2, but not limited to, for example, the length of the buffer member 2 may be about 0.95 times the length of the cell 1, the battery module can further maintain the battery capacity above a certain level within a certain charging period (e.g., 4,500 times of charging). In the unit A, under the condition of matching with the proper width of the buffer member 2, but not limited to, for example, the width of the buffer member 2 is about 0.95 times the width of the cell 1, the battery module can further maintain the battery capacity above a certain level within a certain charging period (e.g., 4,500 times of charging).

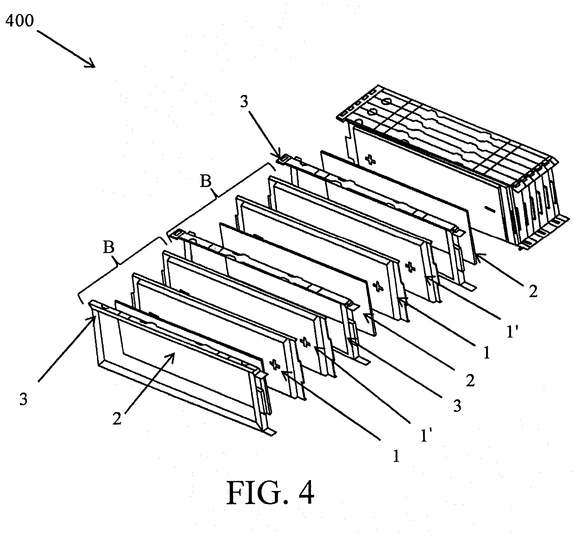

Referring to Fig. 4, Fig. 4 is a schematic exploded diagram of a sub-module of a battery module provided according to an embodiment of the present application. As shown in Fig. 4, the sub-module 400 may include a unit B. In some embodiments, the sub-module 400 may include a plurality of units B. In some embodiments, the sub-module 400 may include a plurality of units B disposed repeatedly. In the sub-module 400, one unit B may include a cell 1, a cell 1', a cell bracket 3 and a buffer member 2. As described above, the interior of the cell bracket 3 may be of a frame structure, and the cell 1 and the cell 1' are respectively installed in a frame of the cell bracket 3. The cell 1' is located on one side of the cell 1 so as to be overlapped with the cell 1, and the buffer member 2 is located on the other side of the cell 1 so as to separate the cell 1 from cells 1' and 1 adjacent thereto (namely in another unit B). Different from the battery module constituted by the units A, in the battery module constituted in this way, the buffer members 2 are disposed between every two adjacent cells 1 of the plurality of cells 1 included therein (namely, a structure of "buffer member/cell/cell/buffer member/cell/cell/buffer member...cell/cell/buffer member" is formed).

In the unit B, the size of the buffer member 2 may be determined by the size of the cell 1. The size of the cell 1 may include the thickness. The size of the cell 1 may include the length. The size of the cell 1 may include the width. The size of the buffer member 2 may include the thickness. The size of the buffer member 2 may include the length. The size of the buffer member 2 may include the width. For the battery module, a proportion of the sizes of the buffer members 2 to the sizes of the cells 1 is quite important. For example, compared with the cells 1, if the buffer members 2 are too thin, the buffer members 2 may fail to effectively provide buffer to the cells 1, and because deformation of the buffer members 2 is quite limited, the buffer members 2 fail to provide enough space to the cells 1 for expansion. For example, compared with the cells 1, if the buffer members 2 are too thick, the buffer members 2 will occupy space of the cells 1 meaninglessly, which lowers the overall capacity and efficacy of the battery module and enlarges the whole volume of the battery module.

In the unit B, the thickness T1 of the buffer member 2 may be related to the thickness TO of the cell 1. In the unit B, the thickness T1 of the buffer member 2 may be determined by the thickness T0 of the cell 1. In the unit B, preferably, the thickness of the buffer member 2 is 0.24 to 0.36 times the thickness of the cell 1 (namely, 0.24T0≤T1≤0.36T0). More preferably, the thickness of the buffer member 2 is 0.28 to 0.32 times the thickness of the cell 1 (namely, 0.28T0≤T1≤0.32T0). In the unit B, the thickness of the buffer member 2 is most preferably 0.3 times the thickness of the cell 1.

In the unit B, the relation between the length and width of the buffer member 2 and the length and width of the cell 1 is the same as that between the length and width of the buffer member 2 and the length and width of the cell 1 in the unit A, please referring to the above, which is omitted herein.

Similar to the unit A, the buffer member 2 with the optimal thickness ratio (namely, the thickness of the buffer member 2 is 0.3 times the thickness of the cell 1) can achieve superior technical effects: the buffer member 2 can effectively buffer the cells 1 and 1' and will not unreasonably occupy space of the cells 1 and 1', which is beneficial to increasing the overall capacity of the battery module. In the unit B, under the condition of matching with the proper length of the buffer member 2, but not limited to, for example, the length of the buffer member 2 may be about 0.95 times the length of the cells 1 and 1', the battery module can further maintain the battery capacity above a certain level within a certain charging period (e.g., 4,500 times of charging). In the unit B, under the condition of matching with the proper width of the buffer member 2, but not limited to, for example, the width of the buffer member 2 is about 0.95 times the width of the cell 1, the battery module can further maintain the battery capacity above a certain level within a certain charging period (e.g., 4,500 times of charging).

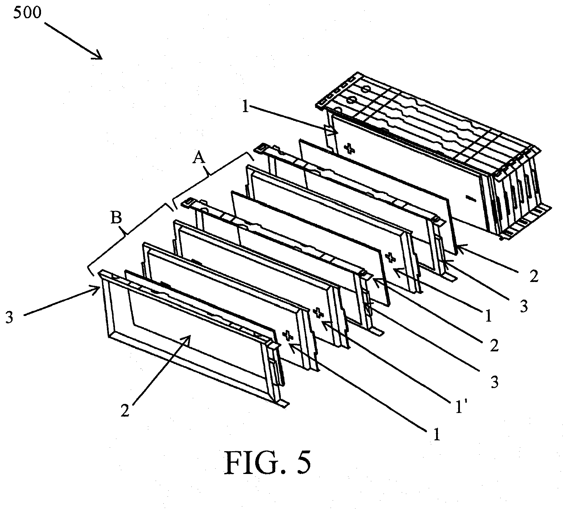

As an alternative embodiment, in one battery module, a plurality of units A and B may be included at the same time. Specifically, referring to Fig. 5, similar to Fig. 3 and Fig. 4, Fig. 5 also shows a schematic exploded diagram of a sub-module 500 of a battery module provided according to an embodiment of the present application. As shown in Fig. 5, the units A and the units B are disposed repeatedly. Each unit A includes a cell 1, a buffer member 2 and a cell bracket 3. The cells 1 are installed in the cell brackets 3, and the buffer members 2 are located on one side of the cells 1 to separate the cells 1 from cells 1 and 1' in the units B. According to the arrangement way, there are cells of different numbers on two sides of each buffer member 2 (in the drawing, two cells (the two cells in each unit B) are located on the left side, and one cell (the cell in each unit A) is located on the right side), forming a structure of "cell/cell/buffer member/cell/buffer member/cell/cell.../buffer member".

In the implementation, the thickness T1 of the buffer members 2 is still related to the thickness T0 of the cells 1 and 1'. Specifically, the thickness of the buffer members 2 is determined according to the number of the cells on the side with more cells. Assuming that the number of the cells on the side with more cells is N, preferably, the thickness of the buffer members 2 is N^{∗}(0.12 to 0.18) times the thickness of the cells 1. More preferably, the thickness of the buffer members 2 is N^{∗}(0.14 to 0.16) times the thickness of the cells 1. For example, in the embodiment of Fig. 5, N=2. Therefore, preferably, the thickness of the buffer members 2 is 0.24 to 0.36 times the thickness of the cells 1. More preferably, the thickness of the buffer members 2 is 0.28 to 0.32 times the thickness of the cells 1. Most preferably, the thickness of the buffer members 2 is 0.3 times the thickness of the cells 1.

In the above embodiments, the sizes of separation layers 2' disposed between a first end plate 41 and a second end plate 42 as well as the cell brackets 3 adjacent thereto may be designed by reference to the sizes of the buffer members 2. For example, the thickness of the separation layers 2' is N^{∗}(0.14 to 0.16) times the thickness of the cells 1, wherein N is the number of the cells 1 adjacent to the separation layers 2'. Most preferably, the thickness of the separation layers 2' is N^{∗}0.15 times the thickness of the cells 1. The length and width of the separation layers 2' are respectively 0.9 to 1.05 times those of the cells 1, and most preferably, the length and width of the separation layers 2' are respectively 0.95 times those of the cells 1.

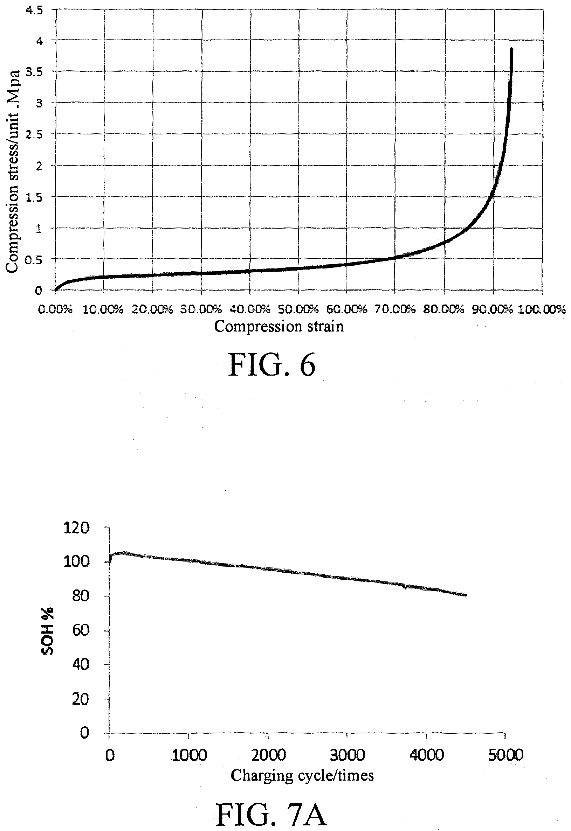

Referring to Fig. 6, in the battery module provided according to the present application, since the thickness, length and width of the buffer members 2 are related to corresponding one of the thickness, length or width of the cells 1, when deforming within a strain range of 0% to 85%, the buffer members 2 provide an acting force of 0 to 1 Mpa to (for example) the cells 1 adjacent thereto; when deforming within a strain range of 10% to 70%, the buffer members 2 provide an acting force of 0 to 0.5 Mpa to (for example) the cells 1 adjacent thereto; and when deforming within a strain range of 70% to 80%, the buffer members 2 provide an acting force of 0.5 to 0.8 Mpa to (for example) the cells 1 adjacent thereto. This kind of acting force range can be very beneficial to keeping the capacity and prolonging the service life of the battery module.

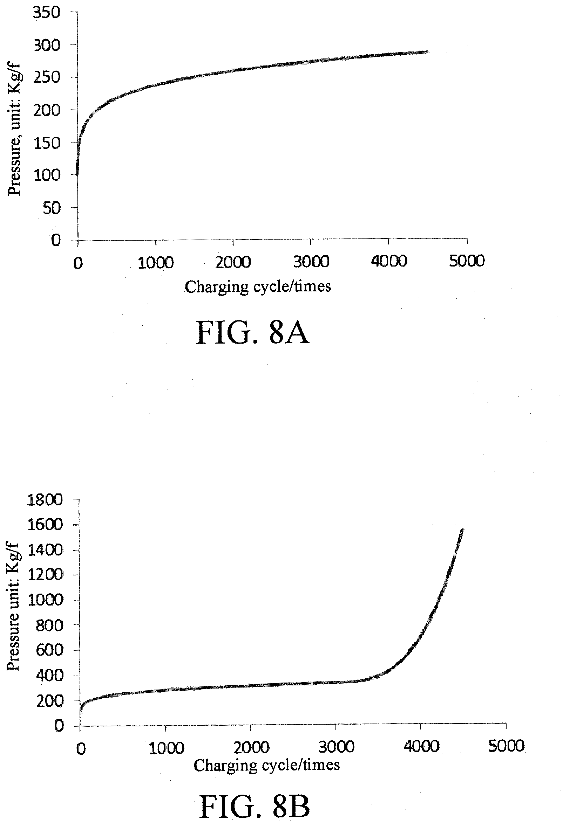

In order to describe the superior technical effects of the above embodiments of the present application more clearly, experiment data of exemplary embodiments and comparative embodiments are listed below by further referring to Figs. 7A-7C and Figs. 8A- 8C, wherein TO, LO and WO respectively represent for the thickness, length and width of the cells.

**Table 1**

| | Exemplary embodiments (corresponding to Figs. 7A and 8A) | Comparative embodiment 1 (corresponding to Figs. 7B and 8B) | Comparative embodiment 2 (corresponding to Figs. 7C and 8C) |
|---|---|---|---|
| Material of buffer members | Polypropylene foam | Polypropylene foam | Polypropylene foam |
| Thickness of buffer members | 0.15T0 | 0.1T0 | 0.15T0 |
| Length^{∗}width of buffer members | 0.95L0X0.95W0 | 0.95L0X0.95W0 | 0.8L0X0.8W0 |
| Maintaining rate of capacity under 4,500 times of charging (Figs. 7A-7C) | 80.93% | 66.62% | 63.86% |
| Pressure level under 4,500 times of charging (unit area) (Figs. 8A-8C) | 286 KG/F (kilogram/force) | 1,545 KG/F (kilogram/force) | 232 KG/F (kilogram/force) |

Referring to Fig. 7A, the experiment data in the drawing are based on the following experiment conditions: the battery module adopts a sub-module constituted by the above units A. That is, every two adjacent cells are spaced by 1 buffer member, a laminating mode of buffer member/cell/buffer member/cell/buffer member...cell/buffer member is adopted, and the module is fixed with binding belts/end plates. The thickness of the buffer members 2 is 0.15 times the thickness of the cells 1, the length and width of the buffer members 2 are respectively 0.95 times those of the cells 1, the material of the buffer members 2 is the polypropylene foam, the density of the buffer members 2 is 35-40 kg/m³, the hardness of the buffer members 2 is 55-65 degrees (HC), and the pore diameters are distributed in a range of 10-80 µm and are distributed in an of 30-50 µm in a concentrated mode. At the moment, it can be seen from the drawing that the maintaining rate of capacity (SOH%) of the battery module slowly decreases. When the battery module is charged for 4,500 times, the maintaining rate of capacity of the battery module can still reach 80.93%, as shown in the above table.

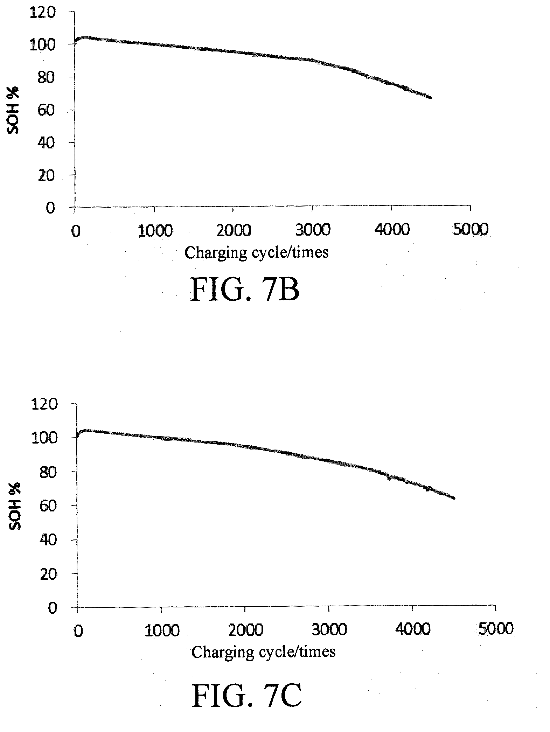

As the Comparative Embodiment 1, under the condition that other experiment conditions are not changed, if the thickness of the buffer members 2 is adjusted to be 0.1 times the thickness of the cells 1, the maintaining rate of capacity will show the experiment result shown in Fig. 7B. As shown in the drawing, when the battery module is charged for 4,500 times, the maintaining rate of capacity of the battery module can still reach 66.62%, as shown in the above table.

As the Comparative Embodiment 2, under the condition that other experiment conditions are not changed, if the thickness and width of the buffer members 2 are respectively adjusted to be 0.8 times those of the cells 1, the maintaining rate of capacity will show the experiment result shown in Fig. 7C. As shown in the drawing, when the battery module is charged for 4,500 times, the maintaining rate of capacity thereof is 63.86%.

It can be seen from the above comparative Figs. 7A-7C that for the battery module structure with the units A, when the thickness of the buffer members 2 is 0.15 times the thickness of the cells 1 and the length and width of the buffer members 2 are respectively 0.95 times those of the cells 1, the battery module can reach the highest maintaining rate of capacity.

Figs. 8A-8C show test levels of pressure under different experiment conditions. Based on the same experiment conditions as the embodiment of Fig. 7A: the battery module adopts a sub-module constituted by the above units A. That is, every two adjacent cells are spaced by 1 buffer member, a laminating mode of buffer member/cell/buffer member/cell/buffer member...cell/buffer member is adopted, and the module is fixed with binding belts/end plates. The thickness of the buffer members 2 is 0.15 times the thickness of the cells 1, the length and width of the buffer members 2 are respectively 0.95 times those of the cells 1, the material of the buffer members 2 is the polypropylene foam, the density of the buffer members 2 is 35-40 kg/m³, the hardness of the buffer members 2 is 55-65 degrees (HC), and the pore diameters are distributed in a range of 10-80 µm and are distributed in an of 30-50 µm in a concentrated mode. At the moment, referring to Fig. 8A, it can be seen from the drawing that pressure and charging times are basically in a linear relation, and the pressure increases along with increasing of the charging times. When the battery module is charged for 4,500 times, the pressure thereof reaches 286 KG/F, as shown in the above table.

As the Comparative Embodiment 1, under the condition that other experiment conditions are not changed, if the thickness of the buffer members 2 is adjusted to be 0.1 times the thickness of the cells 1, the relation between the pressure and the charging times is shown in Fig. 8B. As shown in the drawing, before about 3,400 times, the pressure and the charging times are basically in a linear relation, and the pressure gradually increases along with increasing of the charging times. But after 3,500 times, the pressure will increase quickly. When the battery module is charged for 4,500 times, the pressure thereof is 1,545 KG/F, as shown in the above table.

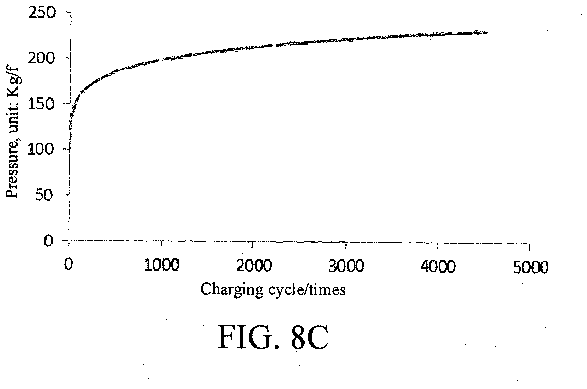

As the Comparative Embodiment 2, under the condition that other experiment conditions are not changed, if the length and width of the buffer members 2 are respectively adjusted to be 0.8 times those of the cells 1, the relation between the pressure and the charging times will be shown by the experiment results in Fig. 8C. A curve in the drawing is similar to that of Fig. 8A, but a pressure value is lower than a pressure value shown in Fig. 8A with the same charging times. For example, when the battery module is charged for 4,500 times, the pressure value thereof is 232 KG/F.

It can be seen from the above comparative Figs. 8A-8C that for the battery module structure with the units A, when the thickness of the buffer members 2 is 0.15 times the thickness of the cells 1 and the length and width of the buffer members 2 are respectively 0.95 times those of the cells 1, the pressure of the battery module can be kept optimal when the battery module is charged for 4,500 times.

More specifically, the thickness of the buffer members (foam) in the embodiment shown in Fig. 8B is relatively small, when cycle counts are relatively high, the buffer members provide a small buffer space, resulting that the cells expand to be large, and consequently the life of a battery is shortened; and the buffer members shown in Fig. 8C have the small area and are not enough to cover the area of the cells, so that a provided buffer space is small, resulting that the cells expand to be large, which also shortens the life of the battery.

As used in the present application, for ease of description, space-related terms such as "under", "below", "lower portion", "above", "upper portion", "lower portion", "left side", "right side", and the like may be used in the present application to describe a relationship between one component or feature and another component or feature as shown in the figures. In addition to orientation shown in the figures, space-related terms are intended to encompass different orientations of the device in use or operation. A device may be oriented in other ways (rotated 90 degrees or at other orientations), and the space-related descriptors used in the present application may also be used for explanation accordingly. It should be understood that when a component is "connected" or "coupled" to another component, the component may be directly connected to or coupled to another component, or an intermediate component may exist.

In the present application, the term "about" generally means within ± 10%, ± 5%, ± 1%, or ± 0.5% of a given value or range. The range may be indicated in the present application as from one endpoint to another endpoint or between two endpoints. Unless otherwise specified, all the ranges disclosed in the present application include endpoints.

Several embodiments of the present application and features of details are briefly described above. Those skilled in the art may make various changes, replacements, and variations without departing from the spirit and scope of the present application, and all such equivalent structures shall fall within the protection scope of the present application.

## Claims

1. A battery module, comprising:
a plurality of cells (1) disposed sequentially in a laminated mode; and
at least one buffer member (2), disposed between at least two of the plurality of cells (1), wherein the buffer members (2) can elastically deform to provide an expansion space when the cells (1) expand, and restore when the cells (1) contract; and
wherein at least one of the thickness, length and width of the buffer members (2) is related to corresponding one of the thickness, length or width of the cells (1), and
when deforming within a strain range of 0% to 85%, the buffer members (2) provide an acting force of 0 to 1 Mpa.

2. The battery module according to claim 1, wherein at least one of the thickness, length and width of the buffer members (2) is related to corresponding one of the thickness, length or width of the cells (1), and when deforming within a strain range of 10% to 70%, the buffer members (2) provide an acting force of 0 to 0.5 Mpa.

3. The battery module according to claim 1, wherein at least one of the thickness, length and width of the buffer members (2) is related to corresponding one of the thickness, length or width of the cells (1), and when deforming within a strain range of 70% to 80%, the buffer members provide an acting force of 0.5 to 0.8 Mpa.

4. The battery module according to claim 1, wherein the cells (1) of a first number and the cells (1) of a second number are disposed on two sides of the buffer members (2) respectively, the first number being greater than or equal to the second number, the first number being N, and the thickness of each buffer member (2) being N^{∗}(0.12 to 0.18) times the thickness of each cell (1).

5. The battery module according to claim 4, wherein the thickness of each buffer member (2) is N^{∗}(0.14 to 0.16) times the thickness of each cell (1).

6. The battery module according to claim 1, wherein the buffer members (2) are disposed between each of the adjacent cells (1) of the plurality of cells (1), the thickness of each buffer member (2) being 0.14 to 0.16 times the thickness of each cell (1).

7. The battery module according to claim 6, wherein the thickness of each buffer member (2) is 0.15 times the thickness of each cell (1).

8. The battery module according to claim 1, wherein the cells (1) and the buffer members (2) each have a flat-plate structure, the length of each buffer member (2) being 0.9 to 1.05 times the length of each cell (1).

9. The battery module according to claim 8, wherein the length of each buffer member (2) is 0.95 to 1.0 times the length of each cell (1).

10. The battery module according to claim 1, wherein the cells (1) and the buffer members (2) each have a flat-plate structure, the width of each buffer member (2) being 0.9 to 1.05 times the width of each cell (1).

11. The battery module according to claim 10, wherein the width of each buffer member (2) is 0.95 to 1.0 times the width of each cell (1).
